(19) Europäisches Patentamt
European Patent Office
Office européen des brevets

(11) **EP 2 322 489 B1**

(12) **FASCICULE DE BREVET EUROPEEN**

(45) Date de publication et mention
de la délivrance du brevet:
**03.07.2019  Bulletin 2019/27**

(51) Int Cl.:
***C03B 37/012*** *(2006.01)*   ***G02B 6/024*** *(2006.01)*

(21) Numéro de dépôt: **10306257.6**

(22) Date de dépôt: **15.11.2010**

(54) **Procédés de fabrication d'une préforme à fibrer et d'une fibre optique à maintien de polarisation ou polarisante obtenue par fibrage de ladite préforme**

Herstellungsverfahren eines Vorformlings zum Faserziehen, und einer optischen Faser mit Polarisierungsaufrechterhaltung oder polarisierende optische Faser, die durch Faserziehen dieses Vorformlings erhalten wurde

Methods for manufacturing a preform to be fibred and a polarisation maintaining or polarising optical fibre obtained by fibring said preform

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **16.11.2009   FR 0958068**

(43) Date de publication de la demande:
**18.05.2011   Bulletin 2011/20**

(73) Titulaire: **IXBLUE**
**78100 Saint-Germain-en-Laye (FR)**

(72) Inventeurs:
• **Robin, Thierry**
**22450 Camlez (FR)**

• **Cadier, Benoît**
**22700 Perros Guirec (FR)**

(74) Mandataire: **Jacobacci Coralis Harle**
**32, rue de l'Arcade**
**75008 Paris (FR)**

(56) Documents cités:
**WO-A1-03/100488      WO-A1-2006/117938**
**JP-A- 4 119 938        JP-A- 60 186 432**
**JP-A- 2003 342 032    US-A1- 2006 088 262**
**US-A1- 2006 291 789**

**EP 2 322 489 B1**

## Description

La présente invention concerne un procédé de fabrication d'une préforme à fibrer pour fibre optique à maintien de polarisation ou pour fibre polarisante. L'invention concerne également la fabrication d'une fibre optique à maintien de polarisation ou polarisante obtenue par fibrage de ladite préforme.

L'effet de maintien de la polarisation dans une fibre optique est dû à l'existence d'une biréfringence dans cette fibre. Il existe deux façons de créer de la biréfringence dans une fibre optique : soit par construction géométrique, soit par application de contraintes transverses à la fibre pour provoquer une dissymétrie de la section transverse de la fibre. Dans le cas de fibres à biréfringence induite par contraintes, il existe principalement trois types de fibres optiques à maintien de polarisation, dont la structure dans un plan de coupe transverse est facilement identifiable : les fibres « Tiger » dont le coeur est entouré d'une gaine de contrainte elliptique, les fibres « bowtie » ou noeud papillon, comprenant un coeur entouré de sections de fibres ayant des coefficients d'expansion thermique différents (CTE), et enfin les fibres Panda comprenant deux barreaux de contrainte disposés symétriquement de part et d'autre du coeur (cf par exemple le document CA2537755).

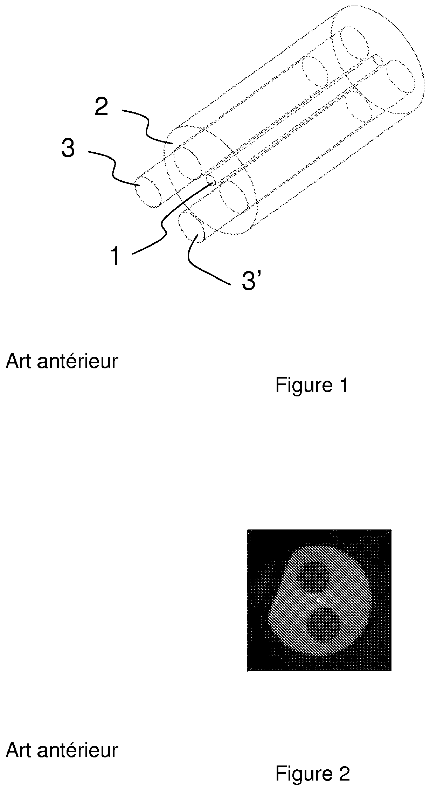

La figure 1 représente schématiquement une préforme de fibre Panda obtenue suivant le procédé classique de fabrication. Les fibres Panda sont généralement fabriquées à partir d'une préforme réalisée par CVD (Chemical Vapor Déposition). La préforme initiale ou préforme primaire est un cylindre de silice dont le coeur central 1 est dopé et est entouré par une gaine 2. Deux trous sont percés longitudinalement dans la préforme et symétriquement par rapport à l'axe central de la préforme. Des barreaux de contrainte 3, 3' sont fabriqués à partir d'un barreau de silice dopée au bore, au phosphore ou d'un mélange bore phosphore, ou au fluor, à l'aluminium, au germanium ou de tout autre élément compatible avec la fabrication de fibre optique et permettant de modifier notablement le coefficient thermique d'expansion (CTE) de la silice. Les barreaux de contrainte 3, 3' sont insérés dans les deux perçages. Par fusion-étirage de la préforme, on obtient ainsi une fibre optique de structure conforme à celle de la préforme et dont le diamètre du coeur est de l'ordre de quelques microns. La figure 2 représente un cliché d'une coupe transverse de fibre Panda ainsi obtenue. Le coeur (point clair central) et les zones de contrainte (disques sombres) sont clairement visibles.

Les fibres Panda sont commercialisées depuis les années 1980 (cf US 4 478 489). Toutefois le procédé classique de fabrication des fibres Panda présente des limites.

Tout d'abord, l'opération de perçage des trous est difficile à maîtriser : le parallélisme et/ou la symétrie centrale des perçages par rapport à l'axe de la préforme sont difficiles à contrôler sur une grande longueur. En effet, la réalisation de perçages excentrés par rapport à l'axe de la préforme nécessite l'utilisation de machines outils spéciales de haute précision, ce qui se traduit par des délais et un coût de fabrication élevés. En pratique, la longueur des perçages est limitée à environ 15 à 20 fois le diamètre du forêt de perçage. De plus, des contraintes importantes peuvent être induites par les alésages dans la préforme, d'où une fragilisation du coeur.

Différentes variantes de procédés de fabrication de fibres optiques polarisantes ou à maintien de polarisation ont été dérivés du procédé vde fabrication classique. Le document JP 60186432 (Sumitomo Electric Industries) décrit un procédé de fabrication d'une préforme pour fibre optique à maintien de polarisation, dans lequel on insère deux barreaux de contrainte de section circulaire dans deux rainures sur les côtés d'un barreau de verre, puis on manchonne cet assemblage dans un tube de verre. Le document JP 2003 342032 (Hitachi Cable) décrit un procédé de fabrication d'une fibre optique à cristaux photoniques comprenant une pluralité de capillaires creux. Le document JP 4 119938 (Sumitomo Electric Industries NTT) décrit un procédé de fabrication d'une préforme pour fibre optique à maintien de polarisation, comprenant les étapes suivantes :usinage d'une préforme primaire pour former deux méplats sur les côtés ; manchonnage par un tube de verre ;puis insertion d'une partie de section quasi semi cylindrique dans l'espace entre chaque méplat et le tube-manchon de verre. Le document WO 03/100488 (Crystal Fiber) décrit une fibre optique biréfringente ou polarisante comprenant une structure périodique à une dimension dans le coeur ou la gaine. Le document US 2006/291789 décrit une fibre de type photonique qui comprend des zones de contrainte de manière à ce que la fibre soit biréfringente ou polarisante.

Les fibres optiques à maintien de polarisation trouvent des applications dans les domaines très variés tels que : les télécommunications optiques, les amplificateurs et lasers à fibres, ou encore l'instrumentation à fibre optique, par exemple les gyroscopes à fibre.

Le diamètre du coeur varie selon les applications : dans les applications les plus courantes de type télécommunication sur fibre ou capteur à fibre, le diamètre de coeur de la fibre $\phi_c$ est de 2 à 10 microns pour un diamètre de gaine $\phi_G$ de 125 microns, tandis que pour les amplificateurs ou les lasers à fibre, le diamètre du coeur $\phi_c$ peut atteindre quelques dizaines de microns pour les fibres à grande taille de mode (LMA large mode area). De plus, pour les applications amplificateurs et lasers, le coeur est généralement dopé aux ions terres rares (Er, Yb, Nd, Tm, Ho,...) ainsi que toutes autres combinaisons de terres rares comme Erbium-Ytterbium ou Thulium-Holmium). La gaine est généralement une matrice de silice, ou de phospho-silicate, d'aluminosilicates, de germano-silicates, ou toute combinaison plus complexe des éléments suivants Al, P, Ge, B, F. Pour les fibres dont le coeur est dopé aux terres rares ou dont la matrice est complexe, notamment phosphosilicate, le diamètre du coeur $\Phi_C$ de la préforme obtenu par les techniques classiques telles la CVD peut être limité à moins de 2mm de diamètre voire moins de 1mm de diamètre, pour un diamètre de gaine $\Phi_G$ de la préforme de 12,5 mm.

Dans le procédé classique de fabrication de fibre Panda, le diamètre de perçage $\phi$t est limité en pratique a environ 3mm, ce qui limite la longueur de perçage typiquement a une longueur LT de 80 mm et ce en perçant l'objet par une seule de ses extrémités (le trou de perçage est non débouchant). Cette taille maximale de perçage, associée au faible diamètre de coeur disponible limite le potentiel kilométrique d'une préforme, c'est-à-dire la longueur maximale Lf de fibre qui peut être obtenue, en particulier lorsqu'on souhaite obtenir une fibre ayant un diamètre de gaine $\phi$G important, de l'ordre 250 ou 400 $\mu$m par exemple, à partir d'une préforme à fibrer dont le diamètre $\phi$G est de l'ordre de 10 mm. Or, lors de l'opération de fibrage, une longueur de mise en route est nécessaire pour démarrer le fibrage. Pour les paramètres de fibre exposés ci-dessus, la longueur utile de la préforme après perçage et insertion des barreaux de contrainte est relativement faible (80 mm) ce qui rend quasiment impossible le fibrage car la longueur de mise en route est proche de la longueur utile de la préforme. La limitation de la longueur de perçage LT en fonction du diamètre de perçage $\phi$t se traduit par une limitation de la longueur Lf et/ou du volume de fibre extraite d'une préforme par fusion-étirage. La longueur Lf de fibre obtenue peut même être inférieure à la longueur minimale requise dans certaines applications sans avoir recours aux soudures. Par exemple dans des applications de gyroscopes à fibre optique de grande précision, la longueur de bobine de fibre nécessaire peut dépasser 10 km d'un seul tenant, c'est-à-dire sans soudure.

Des solutions alternatives au perçage de la préforme ont été proposées pour la fabrication de préforme de fibre optique à maintien de polarisation ou polarisante.

Ainsi, le document CA 2537755 décrit différents procédés de fabrication de préforme destinée à être étirée en fibre à maintien de polarisation ou en fibre polarisante et réalisée non par perçage d'une préforme cylindrique pleine mais par assemblage de plusieurs éléments préformés. Selon une première technique d'assemblage, des sections longitudinales de tubes de verre sont tout d'abord usinées puis assemblées autour d'un barreau comprenant le coeur et la gaine. Deux sections de tube ayant un CTE supérieur aux autres sections sont disposées de manière diamétralement opposées l'une à l'autre pour créer des zones de contraintes et induire une biréfringence. Selon une seconde technique d'assemblage, on entoure un barreau coeur-gaine d'un premier tube de contrainte ayant un CTE élevé et de faible viscosité et d'un second tube externe dont les parois ont sur deux côtés opposés une épaisseur plus mince que sur les portions restantes du tube. Le 2$^{nd}$ tube est fabriqué par rectification cylindrique extérieure pour former deux faces planes et parallèles. Après fusion-étirage, le tube rectifié prend une forme extérieure de section circulaire tandis que le tube de contrainte se déforme en une zone de contrainte de section elliptique.

Cependant, ces différentes techniques d'assemblage présentent des difficultés de réalisation. Le nombre d'éléments à assembler est parfois important et les formes de certains de ces éléments sont complexes (section longitudinale de tube ou de cylindre). De plus, les dimensions de ces éléments doivent correspondre pour s'ajuster entre elles sur toute la longueur de la préforme. Or il est particulièrement difficile de mettre les différents éléments de l'assemblage aux dimensions requises sur une grande longueur en utilisant l'attaque HF ou la rectification cylindrique externe (centerless par exemple) sur grande longueur. De plus, la rectification cylindrique extérieure présente un risque de casse et l'attaque chimique produit des variations de diamètres, et ces deux procédés sont très coûteux en temps. Enfin, le nombre important d'interfaces entre les éléments à refondre risque de créer des contraintes internes indésirables dans la fibre après fusion-étirage.

Les divers procédés de fabrication de préforme à fibrer pour fibre à maintien de polarisation ou pour fibre polarisante présentent donc tous des inconvénients qui limitent le volume de préforme à fibrer disponible et induisent des défauts de qualité optique dans la fibre extraite de la préforme.

L'invention a pour but de remédier à ces inconvénients et de proposer un procédé de fabrication qui permet de produire une préforme dont on puisse extraire une fibre optique à maintien de polarisation de grande longueur, à un coût réduit et avec une excellente qualité optique.

Un autre but de l'invention est de fabriquer une fibre optique à maintien de polarisation ou une fibre polarisante de très grande longueur sans soudure, ou à grand diamètre de coeur et/ou une fibre polarisante à coeur dopé et/ou une fibre polarisante à double gaine.

Plus particulièrement, l'invention concerne un procédé de fabrication d'une préforme à fibrer pour fibre optique à maintien de polarisation ou fibre polarisante. Selon l'invention, le procédé comprend les étapes suivantes :

- fabrication d'une préforme rainurée par formation de deux rainures dans une préforme primaire cylindrique de section circulaire et d'axe XX', ladite préforme primaire comprenant un coeur et une gaine disposée autour du coeur, lesdites rainures s'étendant parallèlement à l'axe XX' et étant disposées symétriquement par rapport à l'axe XX' ;

- fabrication de deux barreaux de contrainte comprenant un coeur et une enveloppe externe, le matériau du coeur des barreaux de contrainte ayant un coefficient thermique d'expansion (CTE) différent de celui de la gaine de la préforme primaire et usinage extérieur de l'enveloppe desdits barreaux de contrainte de manière à ce que les dimensions et la forme des barreaux de contrainte usinés soient ajustées aux dimensions et à la forme des rainures ;

- assemblage de la préforme rainurée, des deux barreaux de contrainte usinés insérés respectivement dans chaque rainure de la préforme rainurée et d'un manchon cylindrique de section annulaire entourant ladite préforme rainurée de manière à former une préforme à fibrer.

Selon un mode de réalisation particulier du procédé de fabrication de l'invention, l'usinage des rainures est effectué au moyen d'une meule de rainurage sur une rectifieuse plane.

Selon un aspect particulier de l'invention, la meule de rainurage est une meule à fond plat de manière à ce que le profil des rainures dans la préforme soit un profil carré ou rectangulaire.

Selon un autre aspect particulier de l'invention, l'usinage de l'enveloppe des barreaux est effectué au moyen d'une rectifieuse plane.

Selon encore un autre aspect particulier de l'invention, l'usinage de l'enveloppe des barreaux est effectué de manière à ce que les barreaux rectifiés aient une section carrée ou rectangulaire.

Selon un mode de réalisation préféré de l'invention, les rainures ont une largeur $L_1$ et le diamètre du coeur des barreaux de contrainte est inférieur à $L_1$.

Selon un mode de réalisation particulier, le procédé de fabrication de l'invention comprend une étape supplémentaire de nettoyage à l'acide fluorhydrique (HF) de la préforme rainurée et des barreaux usinés avant leur assemblage.

Selon un mode de réalisation particulier, le procédé de fabrication de l'invention comprend une étape supplémentaire d'attaque au fréon de la préforme comprenant les barreaux usinés dans les rainures avant le manchonnage.

Selon un mode de réalisation particulier, le coeur des barreaux est en silice dopée d'un élément parmi le bore, le phosphore, le fluor, l'aluminium, le germanium ou d'un mélange de plusieurs de ces éléments, ou de tout autre élément compatible avec la fabrication de fibre optique et permettant de modifier le coefficient thermique d'expansion (CTE) d'un barreau de silice.

Selon un mode de réalisation particulier, l'indice optique du coeur des barreaux de contrainte est égal à l'indice optique de la gaine, de manière à obtenir une adaptation d'indice entre le coeur des barreaux et la gaine.

Selon un mode de réalisation particulier, le procédé de fabrication comprend une étape d'insertion de capillaires creux disposés entre deux manchons entourant l'assemblage qui comprend la préforme et les barreaux de contrainte insérés dans les rainures.

L'invention concerne également un procédé de fabrication d'une fibre optique à maintien de polarisation ou une fibre polarisante obtenue par fibrage d'une préforme à fibrer obtenue selon un procédé de fabrication de préforme de l'invention, ladite fibre optique comprenant un coeur, une gaine entourant le coeur, deux zones de contraintes disposées dans la gaine symétriquement par rapport au coeur et un revêtement.

Selon un autre aspect particulier de l'invention, le diamètre du coeur de la fibre à maintien de polarisation ou polarisante est supérieur à 20 microns.

Selon un autre aspect particulier de l'invention, le coeur de la fibre est dopé par des ions terre rare parmi (Er, Yb, Nd, Tm, Ho) ou par une combinaison de ces terres rares.

Selon encore un aspect de l'invention, la fibre est une fibre double gaine comprenant une mince couche d'air.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente schématiquement une vue éclatée d'une préforme de fibre optique à maintien de polarisation de type Panda selon l'art antérieur ;
- la figure 2 représente une vue en coupe d'une fibre Panda obtenue après fusion-étirage d'une préforme du type représenté sur la figure 1 ;
- la figure 3 représente une vue en perspective d'une préforme primaire de forme cylindrique ;
- la figure 4 représente schématiquement une vue en perspective des éléments d'une préforme de fibre optique avant assemblage ;
- la figure 5 représente schématiquement une vue éclatée d'une préforme de fibre optique selon le procédé de fabrication l'invention ;
- la figure 6 représente un schéma en coupe d'une préforme de fibre optique selon un mode de réalisation du procédé de l'invention ;
- la figure 7 représente une vue en coupe d'une fibre optique à maintien de polarisation obtenue après fibrage d'une préforme telle celle de la Fig 6 ;
- la figure 8 représente un schéma en coupe d'une préforme de fibre optique selon un autre mode de réalisation du procédé de l'invention.

Nous allons maintenant décrire plus en détail un mode de réalisation préféré du procédé de fabrication de l'invention, qui concerne la fabrication d'une préforme pour fibre optique à maintien de polarisation de type Panda comprenant deux barreaux de contrainte disposés symétriquement de part et d'autre du coeur de la fibre.

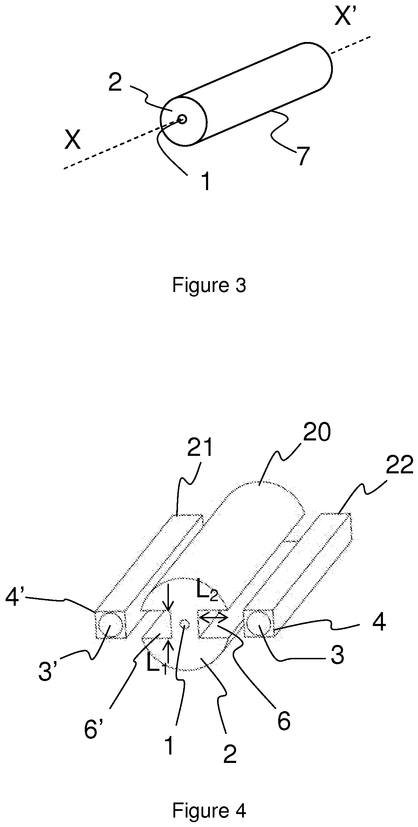

La figure 3 représente schématiquement la préforme primaire 7 ou préforme initiale. On choisit une préforme 7 de forme cylindrique d'axe XX' et de section circulaire comprenant une zone dopée formant le coeur 1 de la préforme et une gaine 2 entourant le coeur. La gaine est généralement en silice ou en phophosilicate, germano-silicate ou un alliage d'éléments Al, P, B, Ge, F dans une matrice de silice.

On pratique ensuite deux rainures 6, 6' externes le long de la préforme primaire, les rainures étant symétriques par rapport à l'axe XX' (cf Figure 4). Les rainures 6, 6' sont de préférence effectuées en utilisant une meule de rainurage sur une rectifieuse plane. Les deux rainures (6, 6') sont de préférence parallèles à l'axe XX'. Le profil des rainures dépend bien entendu de l'outil utilisé. Dans un plan transverse à l'axe XX' les rainures 6, 6' ont une largeur $L_1$ et une profondeur $L_2$. Cette profondeur $L_2$ est choisie pour rapprocher le barycentre du barreau de contrainte, mais tout en restant dans des distance raisonnables pour éviter de provoquer la perte de la préforme par contrainte excessive lors de l'usinage. On définit le rapport *b/a* comme étant le rapport entre la plus petite distance *b* entre les bords des barreaux de contrainte sur le diamètre *a* de coeur. On essaye de rapprocher les barreaux le plus possible (en augmentant la profondeur $L_2$ des rainures ce qui a pour effet de réduire *b*), mais en respectant un rapport *b/a* au minimum égal à deux. Notons que, dans le cas où le rapport *b/a* est très faible, en pratique pour *b/a* inférieur à un, on peut obtenir des fibres qui ne propagent plus le signal que sur un axe de polarisation et qui sont de fait des fibres polarisantes.

On utilise de préférence une meule permettant d'obtenir des rainures de profil carré ou rectangulaire selon la profondeur de rainurage. Dans certaines variantes de l'invention, on peut utiliser une meule à rainurer de forme différente, par exemple avec un fond en demi-disque ou à fond plat avec les angles cassés. Les différentes formes de rainures obtenues peuvent avoir des avantages mais il faut adapter la forme du barreau de contrainte de remplissage, comme détaillé plus loin.

On fabrique des barreaux de contrainte, qui sont par exemple des barreaux de silice dont le coeur 3, 3' est en silice dopée d'un élément choisi parmi le bore, le phosphore, le fluor, l'aluminium, le germanium ou d'un mélange de plusieurs de ces éléments, ou de tout autre élément compatible avec la fabrication de fibre optique et permettant de modifier le coefficient thermique d'expansion (CTE) d'un barreau de silice. Ces barreaux peuvent être fabriqués sur un banc MCVD. Les barreaux de contrainte comprennent une zone centrale 3, 3' dopée par exemple au Bore (14% molaire $B_2O_3$ par exemple) et une enveloppe périphérique 4, 4' en silice.

On augmente aussi la contrainte en augmentant le diamètre du barreau de contrainte (le détail des calculs pour estimer la biréfringence dans une fibre PANDA se trouve par exemple dans la publication : K.AMOTO, T. HOSAKA, and T. EDIHARO, « stress analysis of single-polarization fibers" Rev. Electrical Commun., vol. 31, no. 3, pp 381-392, 1983). Par conséquent, pour une fibre donnée, on a plutôt intérêt à ce que $L_1$ soit le plus grand possible et à utiliser un usinage carré. Les barreaux sont fabriqués ou sélectionnés pour que le diamètre $\Phi_B$ de la partie dopée 3, 3' soit légèrement inférieur à la largeur $L_1$ de la rainure. L'enveloppe 4, 4' des barreaux est ensuite usinée en rectification plane (Figure 4) de manière à ce que les dimensions et la forme des barreaux soient ajustées à celles des rainures 6, 6'.

Dans le cas où le profil des rainures est carré ou rectangulaire, on effectue généralement une rectification de manière à obtenir des barreaux de contrainte de section carrée ou rectangulaire. Les barreaux de contrainte usinés présentent alors quatre faces planes. On pourrait éventuellement rectifier uniquement trois faces. Mais en pratique, un côté non usiné resterait bombé, ce qui serait la source d'une excroissance considérable et qui mettrait en cause la circularité de la fibre finale. Il est à noter que lorsque les barreaux de contrainte sont de section rectangulaire ou carrée, il manque un peu de matière pour que la préforme soit de section parfaitement circulaire. Toutefois, après fibrage, l'impact de ce manque de matière de part et d'autre des barreaux de contraintes est en pratique minime et on observe que l'ovalité résiduelle mesurée sur la fibre extraite d'une telle préforme est bien inférieure aux valeurs généralement obtenues sur des fibres de type Tiger et comparable à celles obtenues sur des fibres classiques panda ou bow tie, c'est-à-dire inférieure à 2% ((Max-min)/max). Il est également possible d'usiner trois faces des barreaux de contrainte avec une meule plane, pour former trois faces d'un carré ou d'un rectangle, et d'usiner une quatrième face au moyen d'une meule concave dont le profil en arc de cercle a un rayon identique à celui de la préforme primaire 7 de manière à produire un barreau ayant trois côtés plans, qui s'emboîtent parfaitement dans la préforme rainurée et un côté de section en arc de cercle pour compléter la préforme de manière à ce que celle-ci retrouve une section parfaitement circulaire.

Les barreaux de contrainte usinés 21, 22 sont ensuite insérés dans les rainures 6, 6' et maintenus par un montage verrier approprié.

Avant d'assembler les barreaux de contrainte 21, 22 dans les rainures 6, 6' de la préforme rainurée 20, on effectue de préférence un nettoyage à l'acide fluorhydrique de la préforme rainurée 20 et des barreaux usinés 21, 22.

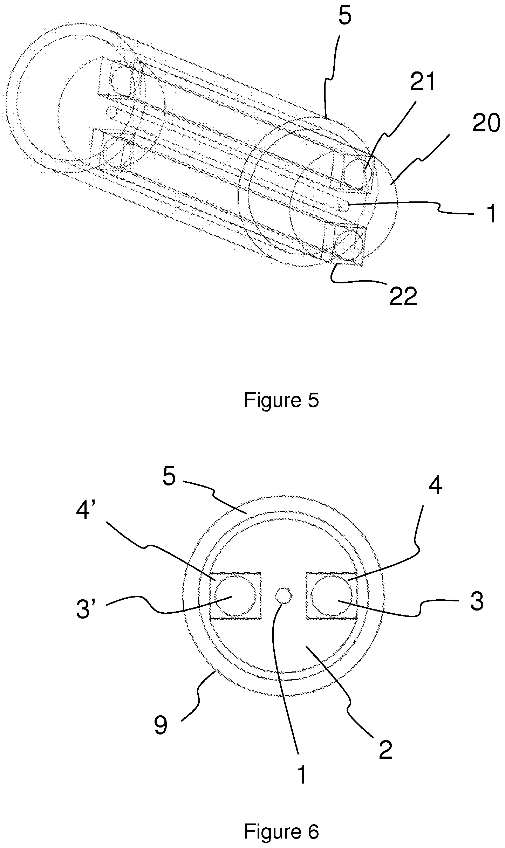

L'ensemble préforme 20 et barreaux 21, 22 insérés dans les rainures 6,6' est ensuite manchonné (cf figure 5-6) par un manchon cylindrique 5 de section annulaire soit sur un banc de verrier soit selon la technique « Rod in tube » c'est-à-dire au fibrage. Le manchon 5 est de préférence en silice.

Avant l'étape de manchonnage, on effectue de préférence une étape classique d'attaque au fréon ($C_2F_6$ par exemple) de la couche superficielle de la préforme assemblée pour améliorer par la suite le refondu au moment du manchonnage.

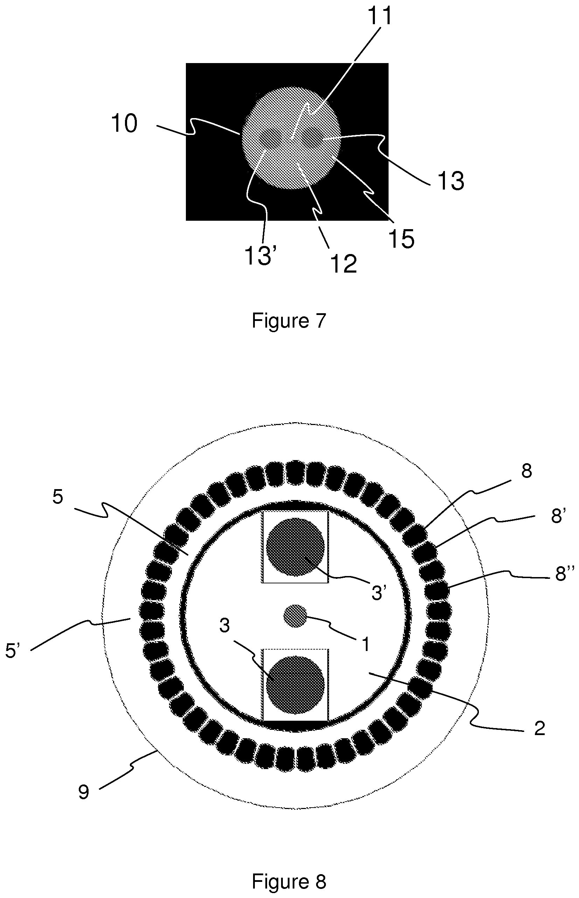

La préforme finale est ensuite fibrée selon les techniques classiques sur une fibreuse pour en extraire une fibre optique à maintien de polarisation ou une fibre polarisante. La fibreuse est classiquement équipée d'un four et de dispositif d'application de revêtement extérieur, par exemple de type acrylate. Le diamètre de la fibre est mesuré et régulé au moyen d'une boucle de réaction sur la vitesse de fibrage dictée par le cabestan. La préforme est maintenue sur un dispositif de descente préforme. La préforme est raccordée à un dispositif permettant un inertage des interstices. L'inertage consiste généralement à faire le vide dans les interstices de la préforme et à remplacer l'air ambiant par un gaz de type Hélium par exemple permettant un bon transfert thermique et favorisant un collage sans défauts. Dans ce but, on peut soit fibrer sous légère dépression, soit réaliser le manchonnage sur un banc verrier et fibrer ensuite la préforme fermée, soit encore réaliser le vide sur le banc verrier au moment du montage et sceller la préforme à la façon d'une ampoule puis réaliser le fibrage. Les différents éléments de la préforme à fibrer sont assemblés de manière à ce que lors de l'étirage tous les éléments soient étirés simultanément. On obtient ainsi une fibre optique 10 comprenant un coeur 11, une gaine 12, deux zones de contrainte 13, 13' et un revêtement 15 et dont les dimensions transverses sont homothétiques de celles de la préforme 9 (cf figure 7).

Pour les applications de gyroscope à fibre, il est souhaitable de réaliser des coupleurs à fibre et des polariseurs directement sur la bobine de fibre à maintien de polarisation ou polarisante. Dans ce but, la composition chimique du coeur 3, 3' des barreaux de contrainte peut être adaptée de façon à obtenir un indice optique des zones 13, 13' équivalent à celui de la silice naturelle ou synthétique, tout en conservant pour les barreaux un CTE supérieur à celui de la gaine 2. Cette adaptation d'indice entre la gaine et les barreaux de contrainte, supprime le contraste d'indice optique entre ces éléments, ce qui rend difficile l'alignement des axes de polarisation notamment lors des soudures. Dans ce cas, la perte de contraste des barreaux de contraintes peut être compensée par l'ajout d'une fine couche de fluor ou de bore en périphérie du barreau de contrainte. Cette fine couche dopée permet d'augmenter le contraste entre les barreaux et la gaine de façon à rendre visibles les zones de contrainte 13, 13' et faciliter l'alignement ou les soudures. Ce mode de réalisation particulier permet ainsi la réalisation de coupleur fibré ou de polariseur par fusion étirage, en particulier pour la fabrication de gyroscope entièrement fibré.

Selon un autre mode de réalisation particulier de l'invention, il est également possible de réaliser des fibres double gaine (double clad en anglais). Dans ce cas de fibres à double gaine, une première gaine est constituée de la silice de la préforme primaire et du manchon servant au « rod in tube ». Selon un premier procédé, la double gaine peut être réalisée au moyen d'un revêtement acrylate bas indice, dont l'indice est inférieur à la silice de façon à obtenir une ouverture numérique importante de l'ordre de 0,46. Selon un second procédé, la double gaine est réalisée par une mince couche d'air formée de capillaires de silice (8, 8', 8") disposés jointivement entre deux manchons de silice (5, 5') et lesdits capillaires étant maintenus ouverts lors du fibrage (cf figure 8). La juxtaposition continue de capillaires entre deux manchons forme ainsi une couronne. Les fibres double gaine sont utilisées en particulier dans les amplificateurs ou les lasers à fibre, la double gaine servant à guider une onde de pompe. Les capillaires sont choisis de manière à ce que la couronne d'air ait une largeur suffisante pour assurer le guidage de la pompe, cette largeur étant supérieure à environ 10 fois la longueur d'onde de pompe.

Dans les deux cas, la gaine de silice principale 2 autour du coeur dopé devient une zone de propagation multimode utilisée pour propager de la puissance de pompe dans les applications amplificateur et laser.

Le procédé de fabrication d'une préforme de l'invention est relativement simple à réaliser, puisqu'il est basé sur l'assemblage d'un petit nombre d'élément : la préforme rainurée 20, les deux barreaux usinés 21, 22 et le manchon 5.

De plus, le procédé de fabrication ne requiert pas de machine outil de très haute précision comme celle requise pour des perçages excentrés de barreaux, mais simplement une rectifieuse plane. Enfin, la rectification plane est une opération simple avec un faible risque pour la préforme, d'où un gain de rendement de fabrication. Par conséquent, le procédé de fabrication est plus rapide et plus économique que les procédés antérieurs.

La fibre optique 10 à maintien de polarisation obtenue selon le procédé de l'invention (Fig. 7) présente une grande résistance mécanique et est sans défaut optique susceptible d'induire un brouillage accidentel entre les axes de polarisation ou des pertes de puissance de pompe par diffraction.

Un avantage particulièrement intéressant de l'invention résulte de ce que la longueur des rainures 6, 6' dans le sens longitudinal de la préforme, peut être beaucoup plus importante que la longueur des perçages dans une préforme de fibre Panda selon l'art antérieur. En effet, la longueur de la préforme de l'invention est uniquement limitée par la longueur de la préforme initiale réalisée par la technique MCVD ou par la longueur de la rectifieuse planaire utilisée pour former les rainures. Par conséquent, la longueur des fibres optiques qui peut être extraite d'une préforme fabriquée selon le procédé de l'invention peut ainsi être bien supérieure à celle d'une fibre Panda classique. Une fibre à maintien de polarisation de grande longueur et sans soudure peut ainsi être obtenue, ce qui permet de nouvelles applications, par exemple dans les gyroscopes à fibre optique.

A partir d'une préforme obtenue selon le procédé de fabrication de l'invention, il devient possible de fabriquer des fibres optiques à maintien de polarisation ou des fibres polarisantes ayant une longueur sans soudure, un diamètre de coeur ou une double gaine, dont les dimensions n'étaient pas réalisables jusqu'à présent. En fonction des paramètres que sont le diamètre $\phi_f$ de la fibre et le diamètre des barreaux $\Phi_T$, il est possible de définir par une formule empirique la longueur de la fibre optique à maintien de polarisation ou polarisante obtenue selon le procédé de l'invention. Il est possible, selon le procédé de l'invention, d'obtenir une fibre à maintien de polarisation ou polarisante, ayant une longueur $L_f$ sans soudure supérieure à :

$$L_f > 400^*(\Phi_T)^3/(\phi_f)^2$$

Le coefficient 400 dans la formule ci-dessus, prend en compte le fait que le diamètre de la préforme $\Phi$ est au maximum égal 3,5 fois le diamètre du barreau, que la longueur des barreaux est au maximum de 40 fois celle du diamètre de barreau et que le rendement de fibrage est de 80%.

La formule ci-dessus appliquée à une fibre de diamètre $\phi_f$ égal à 200μm et pour un diamètre de barreau de 3mm, nous donne une longueur $L_f$ supérieure à 270 m. Pour un barreau de 7 mm de diamètre et une fibre de diamètre $\phi_f$ égal à 80 μm, on obtient une fibre à maintien de polarisation ou polarisante dont la longueur peut dépasser 21 km.

L'invention permet également de supprimer certains verrous technologiques notamment sur les fibres optiques à maintien de polarisation double gaine ou encore sur les fibres Panda dopées terre rare à gros coeur notamment de diamètre de coeur au delà de 10 μm et en particulier supérieur à 20 μm.

## Revendications

1. Procédé de fabrication d'une préforme (9) à fibrer pour fibre optique (10) à maintien de polarisation ou fibre polarisante, ledit procédé comprenant les étapes suivantes :

    - fabrication d'une préforme rainurée (20) par formation de deux rainures (6, 6') dans une préforme primaire (7) cylindrique de section circulaire et d'axe XX', ladite préforme primaire (7) comprenant un coeur (1) et une gaine (2) disposée autour du coeur (1), lesdites rainures (6, 6') s'étendant parallèlement à l'axe XX' et étant disposées symétriquement par rapport à l'axe XX' ;
    - fabrication de deux barreaux de contrainte comprenant un coeur (3, 3') et une enveloppe externe (4, 4'), le matériau du coeur (3, 3') des barreaux de contrainte ayant un coefficient thermique d'expansion (CTE) différent de celui de la gaine (2) de la préforme primaire (7) et usinage extérieur de l'enveloppe (4,4') desdits barreaux de contrainte de manière à ce que les dimensions et la forme des barreaux de contrainte usinés (21, 22) soient ajustées aux dimensions et à la forme des rainures (6, 6') ;
    - assemblage de la préforme rainurée (20), des deux barreaux de contrainte usinés (21, 22) insérés respectivement dans chaque rainure (6, 6') de la préforme rainurée (20) et d'un manchon (5) cylindrique de section annulaire entourant ladite préforme rainurée de manière à former une préforme à fibrer (9).

2. Procédé de fabrication d'une préforme selon la revendication 1 **caractérisé en ce que** l'usinage des rainures (6, 6') est effectué au moyen d'une meule de rainurage sur une rectifieuse plane.

3. Procédé selon la revendication 2 **caractérisé en ce que** la meule de rainurage est une meule à fond plat de manière à ce que le profil des rainures (6, 6') dans la préforme soit un profil carré ou rectangulaire.

4. Procédé de fabrication d'une préforme selon l'une des revendications 1 à 3 **caractérisé en ce que** l'usinage de l'enveloppe (4, 4') des barreaux de contrainte est effectué au moyen d'une rectifieuse plane.

5. Procédé de fabrication d'une préforme selon la revendication 6 **caractérisé en ce que** l'usinage de l'enveloppe (4, 4') des barreaux de contrainte est effectué de manière à ce que les barreaux de contrainte aient une section carrée ou rectangulaire.

6. Procédé de fabrication d'une préforme selon l'une des revendications 3 à 5 **caractérisé en ce que** les rainures (6, 6') ont une largeur $L_1$ et **en ce que** le diamètre du coeur (3, 3') des barreaux de contrainte est inférieur à $L_1$.

7. Procédé de fabrication d'une préforme selon l'une des revendications 1 à 6 **caractérisé en ce qu'**il comprend une étape supplémentaire de nettoyage à l'acide fluorhydrique (HF) de la préforme rainurée (20) et des barreaux de contrainte usinés (21, 22) avant leur assemblage.

8. Procédé de fabrication d'une préforme selon l'une des revendications 1 à 7 **caractérisé en ce qu'**il comprend une étape supplémentaire d'attaque au fréon de la préforme comprenant les barreaux de contrainte (21, 22) dans les rainures (6, 6') avant le manchonnage.

9. Procédé de fabrication d'une préforme selon l'une des revendications 1 à 8 **caractérisé en ce que** le coeur (3, 3') des barreaux est en silice dopée d'un élément choisi parmi le bore, le phosphore, le fluor, l'aluminium, le germanium ou d'un mélange de plusieurs de ces éléments, ou de tout autre élément compatible avec la fabrication de fibre optique et permettant de modifier le coefficient thermique d'expansion (CTE) d'un barreau de silice.

**10.** Procédé de fabrication d'une préforme selon l'une des revendications 1 à 9, **caractérisé en ce que** l'indice optique du coeur (3, 3') des barreaux de contrainte est égal à l'indice optique de la gaine (2), de manière à obtenir une adaptation d'indice entre le coeur (3, 3') des barreaux et la gaine (2).

**11.** Procédé de fabrication d'une préforme selon l'une des revendications 1 à 10 **caractérisé en ce qu'**il comprend une étape d'insertion de capillaires creux (8, 8', 8") entre deux manchons (5, 5') de manière à former un anneau entourant l'assemblage qui comprend la préforme rainurée (20) et les barreaux de contrainte (21, 22) insérés dans les rainures (6, 6').

**12.** Procédé de fabrication d'une fibre optique (10) à maintien de polarisation ou polarisante comprenant une étape de fibrage d'une préforme à fibrer (9) obtenue selon le procédé de l'une des revendications 1 à 11 sur une fibreuse, ladite fibre optique (10) comprenant un coeur (11), une gaine (12) entourant le coeur (11), deux zones de contraintes (13, 13') disposées dans la gaine symétriquement par rapport au coeur (11) et un revêtement (15).

**13.** Procédé de fabrication d'une fibre optique (10) à maintien de polarisation ou polarisante selon la revendication 12, ladite fibre optique (10) comprenant un coeur (11), une gaine (12) entourant le coeur (11), deux zones de contraintes (13, 13') disposées dans la gaine symétriquement par rapport au coeur (11) et un revêtement (15), **caractérisée en ce que** le diamètre du coeur (11) de la fibre est supérieur à 20 microns.

**14.** Procédé de fabrication d'une fibre optique (10) à maintien de polarisation ou polarisante selon l'une des revendications 12 à 13, ladite fibre optique (10) comprenant un coeur (11), une gaine (12) entourant le coeur (11), deux zones de contraintes (13, 13') disposées dans la gaine symétriquement par rapport au coeur (11) et un revêtement (15), **caractérisée en ce que** le coeur (11) de la fibre est dopé par des ions terre rare parmi (Er, Yb, Nd, Tm, Ho) ou par une combinaison de ces terres rares.

**15.** Procédé de fabrication d'une fibre optique (10) à maintien de polarisation ou polarisante selon la revendication 11, ladite fibre optique (10) comprenant un coeur (11), une gaine (12) entourant le coeur (11), deux zones de contraintes (13, 13') disposées dans la gaine symétriquement par rapport au coeur (11) et un revêtement (15), **caractérisée en ce que** la fibre est une fibre double gaine comprenant un ensemble de capillaires creux juxtaposés de manière à former un anneau.

**Patentansprüche**

**1.** Herstellungsverfahren eines Vorformlings (9) zum Faserziehen für eine optische Faser mit Polarisierungsaufrechterhaltung oder eine polarisierende Faser, wobei das Verfahren die folgenden Schritte aufweist:

- Herstellen eines mit Nuten versehenen Vorformlings (20) durch Bildung von zwei Nuten (6, 6') in einem zylindrischen primären Vorformling (7) mit kreisrundem Querschnitt und einer Achse XX', wobei der primäre Vorformling (7) einen Kern (1) und eine um den Kern (1) angeordnete Hülle (2) aufweist, wobei sich die Nuten (6, 6') parallel zur Achse XX' erstrecken und zur Achse XX' symmetrisch angeordnet sind;
- Herstellen von zwei Beanspruchungsstangen, die einen Kern (3, 3') und eine äußere Hülle (4, 4') aufweisen, wobei das Material des Kerns (3, 3') der Beanspruchungsstangen einen von jenem der Hülle (2) des primären Vorformlings (7) verschiedenen thermischen Ausdehnungskoeffizienten (CTE) hat, und äußere Bearbeitung der Hülle (4, 4') der Beanspruchungsstangen derart, daß die Abmessungen und die Form der bearbeiteten Beanspruchungsstangen (21, 22) an die Abmessungen und die Form der Nuten (6, 6') angepaßt sind;
- Zusammenfügen des mit Nuten versehenen Vorformlings (20), der beiden jeweilig in die beiden Nuten (6, 6') des mit Nuten versehenen Vorformlings (20) eingesetzten bearbeiteten Beanspruchungsstangen (21, 22) und einer zylindrischen Hülse (5) mit ringförmigem Querschnitt, die den mit Nuten versehenen Vorformling umgeben, um einen Vorformling zum Ziehen zu bilden.

**2.** Herstellungsverfahren eines Vorformlings gemäß Anspruch 1, **dadurch gekennzeichnet, daß** die Bearbeitung der Nuten (6, 6') mittels eines Nutschleifsteins auf einer Planschleifmaschine erfolgt.

**3.** Herstellungsverfahren eines Vorformlings gemäß Anspruch 2, **dadurch gekennzeichnet, daß** der Nutschleifstein ein Schleifstein mit flachem Boden ist, damit das Profil der Nuten (6, 6') im Vorformling ein quadratisches oder rechteckiges Profil ist.

**4.** Herstellungsverfahren eines Vorformlings gemäß einem der Ansprüche 1 bis 3, **dadurch gekennzeichnet, daß** die Bearbeitung der Hülle (4, 4') der Beanspruchungsstangen mittels einer Planschleifmaschine erfolgt.

**5.** Herstellungsverfahren eines Vorformlings gemäß Anspruch 4, **dadurch gekennzeichnet, daß** die Bearbeitung der Hülle (4, 4') der Beanspruchungsstangen derart erfolgt, daß die Beanspruchungsstangen einen quadratischen oder rechteckigen Querschnitt aufweisen.

6. Herstellungsverfahren eines Vorformlings gemäß einem der Ansprüche 3 bis 5, **dadurch gekennzeichnet, daß** die Nuten (6, 6') eine Breite $L_1$ aufweisen und daß der Durchmesser des Kerns (3, 3') der Beanspruchungsstangen kleiner als $L_1$ ist.

7. Herstellungsverfahren eines Vorformlings gemäß einem der Ansprüche 1 bis 6, **dadurch gekennzeichnet, daß** es einen zusätzlichen Schritt des Säuberns des mit Nuten versehenen Vorformlings (20) und der bearbeiteten Beanspruchungsstangen (21, 22) mit Fluorwasserstoffsäure (HF) vor dem Zusammenfügen aufweist.

8. Herstellungsverfahren eines Vorformlings gemäß einem der Ansprüche 1 bis 7, **dadurch gekennzeichnet, daß** es einen zusätzlichen Schritt des Angreifens des die Beanspruchungsstangen (21, 22) in den Nuten (6, 6') aufweisenden Vorformlings mit Freon vor dem Umgeben mit der Hülse aufweist.

9. Herstellungsverfahren eines Vorformlings gemäß einem der Ansprüche 1 bis 8, **dadurch gekennzeichnet, daß** der Kern (3, 3') der Stangen aus mit einem aus Bor, Phosphor, Fluor, Aluminium, Germanium ausgewähltem Element oder einer Mischung von mehreren dieser Elemente oder mit jeglichem anderen Element, das mit der Herstellung einer optischen Faser kompatibel ist, dotierten Silizium ist und geeignet ist, den thermischen Ausdehnungskoeffizienten (CTE) einer Siliziumstange zu verändern.

10. Herstellungsverfahren eines Vorformlings gemäß einem der Ansprüche 1 bis 9, **dadurch gekennzeichnet, daß** der optische Index des Kerns (3, 3') der Beanspruchungsstangen gleich dem optischen Index der Hülle ist, um eine Indexanpassung zwischen dem Kern (3, 3') der Beanspruchungsstangen und der Hülle (2) zu erzielen.

11. Herstellungsverfahren eines Vorformlings gemäß Anspruch 1, **dadurch gekennzeichnet, daß** es einen Schritt des Einsetzens von hohlen Kapillarfasern (8, 8', 8") zwischen zwei Hülsen (5, 5') aufweist, um einen Ring zu bilden, der das Zusammengefügte, das den mit Nuten versehenen Vorformling (20) und die in die Nuten (6, 6') eingesetzten Beanspruchungsstangen (21, 22) aufweist, umgibt.

12. Herstellungsverfahren einer optischen Faser (10) mit Polarisierungsaufrechterhaltung oder einer polarisierenden Faser, das einen Schritt einer Faserbildung eines Vorformlings zum Ziehen (9), der gemäß einem der Ansprüche 1 bis 11 auf einer Faserziehmaschine erhalten worden ist, wobei die optische Faser (10) einen Kern (11), eine den Kern (11) umgebende Hülle (12), zwei in der Hülle symmetrisch zum Kern (11) angeordnete Beanspruchungszonen (13, 13') und eine Beschichtung (15) aufweist.

13. Herstellungsverfahren einer optischen Faser (10) mit Polarisierungsaufrechterhaltung oder einer polarisierenden Faser gemäß Anspruch 12, wobei die optische Faser (10) einen Kern (11), eine den Kern (11) umgebende Hülle (12), zwei in der Hülle symmetrisch zum Kern (11) angeordnete Beanspruchungszonen (13, 13') und eine Beschichtung (15) aufweist, **dadurch gekennzeichnet, daß** der Durchmesser des Kerns (11) der Faser größer als 20 Mikrometer ist.

14. Herstellungsverfahren einer optischen Faser (10) mit Polarisierungsaufrechterhaltung oder einer polarisierenden Faser gemäß einem der Ansprüche 12 bis 13, wobei die optische Faser (10) einen Kern (11), eine den Kern (11) umgebende Hülle (12), zwei in der Hülle symmetrisch zum Kern (11) angeordnete Beanspruchungszonen (13, 13') und eine Beschichtung (15) aufweist, **dadurch gekennzeichnet, daß** der Kern (11) der Faser mit Ionen von aus (Er, Yb, Nd, Tm, Ho) ausgewählter seltener Erde oder mit einer Kombination aus diesen seltenen Erden dotiert ist.

15. Herstellungsverfahren einer optischen Faser (10) mit Polarisierungsaufrechterhaltung oder einer polarisierenden Faser gemäß Anspruch 11, wobei die optische Faser (10) einen Kern (11), eine den Kern (11) umgebende Hülle (12), zwei in der Hülle symmetrisch zum Kern (11) angeordnete Beanspruchungszonen (13, 13') und eine Beschichtung (15) aufweist, **dadurch gekennzeichnet, daß** die Faser eine doppelt umhüllte Faser ist, die eine Gesamtheit von nebeneinander angeordneten hohlen Kapillarfasern aufweist, um einen Ring zu bilden.

**Claims**

1. A method for manufacturing a preform (9) to be fibred for a polarization maintaining optical fibre or polarizing fibre (10), said method comprising the following steps:

   - manufacturing a grooved preform (20) by forming two grooves (6, 6') into a cylindrical primary preform (7) of circular cross-section and of axis XX', said primary preform (7) comprising a core (1) and a cladding (2) arranged about the core (1), said grooves (6, 6') extending parallel to the axis XX' and being arranged symmetrically with respect to the axis XX';

- manufacturing two stressing bars comprising a core (3, 3') and an external envelop (4, 4'), the material of the core (3, 3') of the stressing bars having a coefficient of thermal expansion (CTE) that is different from that of the cladding (2) of the primary preform (7), and external machining of the envelop (4, 4') of said stressing bars so that the size and form of the machined stressing bars (21, 22) are adjusted to the size and form of the grooves (6, 6') ;

- assembling the grooved preform (20), the two machined stressing bars (21, 22) respectively inserted into each groove (6, 6') of the grooved preform (20) and a cylindrical sleeve (5) of annular cross-section, surrounding said grooved preform so as to form a preform to be fibred (9).

2. The method for manufacturing a preform according to claim 1, **characterized in that** the machining of the grooves (6, 6') is performed by means of a groove grinding wheel of a planar grinder.

3. The method according to claim 2, **characterized in that** the groove grinding wheel is a flat-bottom grinding wheel so that the profile of the grooves (6, 6') in the preform is a square or rectangular profile.

4. The method for manufacturing a preform according to one of claims 1 to 3, **characterized in that** the machining of the envelope (4, 4') of the stressing bars is performed by means of a planar grinder.

5. The method for manufacturing a preform according to claim 6, **characterized in that** the machining of the envelope (4, 4') of the stressing bars is performed so that the stressing bars have a square or rectangular cross-section.

6. The method for manufacturing a preform according to one of claims 3 to 5, **characterized in that** the grooves (6, 6') have a length $L_1$ and **in that** the diameter of the core (3, 3') of the stressing bars is lower than $L_1$.

7. The method for manufacturing a preform according to one of claims 1 to 6, **characterized in that** it comprises an additional step of cleaning the grooved preform (20) and the machined stressing bars (21,22) with hydrofluoric acid (HF) before their assembling.

8. The method for manufacturing a preform according to one of claims 1 to 7, **characterized in that** it comprises an additional step of freon etching the preform comprising the stressing bars (21, 22) in the grooves (6, 6') before the sleeving.

9. The method for manufacturing a preform according to one of claims 1 to 8, **characterized in that** the core (3, 3') of the bars is made of silica doped with an element chosen among boron, phosphorus, fluorine, aluminium, germanium or a mixture of several of these elements, or with any other element compatible with the manufacturing of optical fibres and making it possible to modify the coefficient of thermal expansion (CTE) of a silica bar.

10. The method for manufacturing a preform according to one of claims 1 to 9, **characterized in that** the optical index of the core (3, 3') of the stressing bars is equal to the optical index of the cladding (2), so as to obtain an index matching between the core (3, 3') of the bars and the cladding (2).

11. The method for manufacturing a preform according to one of claims 1 to 10, **characterized in that** it comprises a step of inserting hollow capillaries (8, 8', 8") between two sleeves (5, 5') so as to form a ring surrounding the assembly that comprises the grooved preform (20) and the stressing bars (21, 22) inserted into the grooves (6, 6').

12. A method for manufacturing a polarization maintaining or polarizing optical fibre (10), comprising a step of fibre drawing a preform to be fibred (9) obtained according to the method according to one of claims 1 to 11 on a fibre-drawing machine, said optical fibre (10) comprising a core (11), a cladding (12) surrounding the core (11), two stressing zones (13, 13') arranged in the cladding symmetrically with respect to the core (11), and a coating (15).

13. The method for manufacturing a polarization maintaining or polarizing optical fibre (10) according to claim 12, said optical fibre (10) comprising a core (11), a cladding (12) surrounding the core (11), two stressing zones (13, 13') arranged in the cladding symmetrically with respect to the core (11), and a coating (15), **characterized in that** the diameter of the core (11) of the fibre is higher than 20 microns.

14. The method for manufacturing a polarization maintaining or polarizing optical fibre (10) according to one of claims 12 to 13, said optical fibre (10) comprising a core (11), a cladding (12) surrounding the core (11), two stressing zones (13, 13') arranged in the cladding symmetrically with respect to the core (11), and a coating (15), **characterized in that** the core (11) of the fibre is doped with rare earth ions among (Er, Yb, Nd, Tm, Ho) or by a combination of these rare earths.

15. The method for manufacturing a polarization maintaining or polarizing optical fibre (10) according to claim 11, said optical fibre (10) comprising a core (11), a cladding (12) surrounding the core (11), two stressing zones (13, 13') arranged in the cladding symmetrically with respect to the core (11), and a coating (15), **characterized in that** the fibre is a double-cladding fibre comprising a set of hollow capillaries juxtaposed so as to form a ring.

2

3

1

3'

Art antérieur

Figure 1

Art antérieur

Figure 2

Figure 3

Figure 4

Figure 5

Figure 6

Figure 7

Figure 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2537755
- US 4478489 A
- JP 60186432 B
- JP 2003342032 A
- JP 4119938 A
- WO 03100488 A
- US 2006291789 A

**Littérature non-brevet citée dans la description**

- **K.AMOTO ; T. HOSAKA ; T. EDIHARO.** stress analysis of single-polarization fibers. *Rev. Electrical Commun.,* 1983, vol. 31 (3), 381-392